# EUROPEAN PATENT SPECIFICATION

(11) **EP 1 801 472 B1**
(45) Date of publication and mention of the grant of the patent: **18.08.2010**
(21) Application number: 06026359.7
(22) Date of filing: 19.12.2006
(51) Int. Cl.: F16J 15/44

(54) **Sealing device**
Dichtungsvorrichtung
Dispositif d'étanchéité

(30) Priority: 22.12.2005 JP 2005370129
(43) Date of publication of application: 27.06.2007
(73) Proprietor: KABUSHIKI KAISHA TOSHIBA, Tokyo (JP)
(72) Inventor: Kamimura, Kenji, 1-1 Shibaura 1-chome Minato-ku Tokyo (JP); Sasaki, Takashi, 1-1 Shibaura 1-chome Minato-ku Tokyo (JP); Sakakida, Hitoshi, 1-1 Shibaura 1-chome Minato-ku Tokyo (JP); Tsuda, Yoichi, 1-1 Shibaura 1-chome Minato-ku Tokyo (JP); Asai, Satoru, 1-1 Shibaura 1-chome Minato-ku Tokyo (JP)
(74) Representative: Kramer - Barske - Schmidtchen

(56) References cited:
- GB-A- 2 399 777
- US-A- 4 566 700
- US-A1- 2004 126 225
- US-B1- 6 203 021

## Description

### BACKGROUND OF THE INVENTION

### Field of The Invention

The present invention relates to a sealing device for significantly reducing leakage of fluid from a gap between a stationary portion and a rotating portion of, for example, a fluid machinery such as steam or gas turbine.

### Related Art

In general, an efficiency of a steam turbine or a gas turbine used in an electric power plant is affected by an amount of fluid used for rotating, for example, turbine blades. That is, performance of the turbine depends on sealing technology for reducing an amount of fluid leakage from a gap between a stationary (or fixed) component and a rotating component of the turbine.

Therefore, sealing technology for controlling the leakage of the fluid, which does not contribute to generate the power, has been recognized to be an important technology for improving the performance of the turbine.

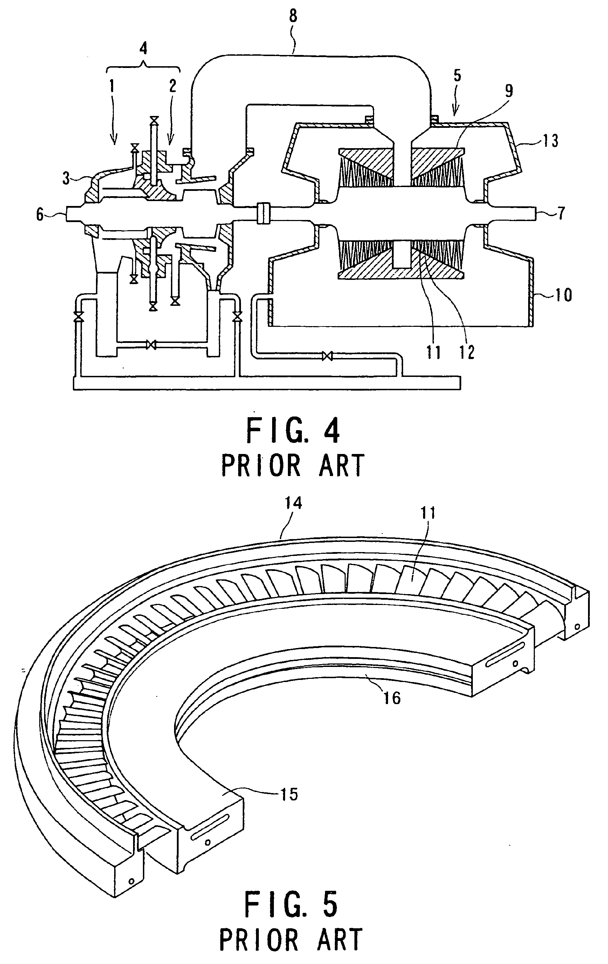

Fig. 4 shows an exemplary structure of a steam turbine provided with such a sealing technology that has been recognized as an important technology for improving an efficiency of a turbine.

This steam turbine has a high-pressure turbine 1 and an intermediate-pressure turbine 2 housed in one turbine casing 3. Namely, the steam turbine is called a high-intermediate-pressure turbine 4, and in addition, a low-pressure turbine 5 is axially connected to this high-intermediate-pressure turbine 4.

In such a turbine, one turbine rotor 6 arranged around a center of the turbine casing 3 is commonly used for the high-pressure turbine 1 and the intermediate-pressure turbine 2 of the high-intermediate-pressure turbine 4.

The each of the high-pressure turbine 1 and the intermediate-pressure turbine 2 are provided with multiple turbine stages composed of nozzle vanes (stationary blades) engaged with the turbine casing 3 and buckets (turbine movable blade) implanted in the turbine rotor 6 respectively. These turbine stages are arranged along the axial direction of the turbine rotor 6.

The low-pressure turbine 5 has a low-pressure turbine rotor 7 axially connected to the turbine rotor 6 of the high-intermediate-pressure turbine 4. The low-pressure turbine 5 is connected to the high-intermediate-pressure turbine 4 with a crossover tube 8. The crossover tube 8 is disposed around the center of a low-pressure turbine casing 13. Thus, the low-pressure turbine 5 is of the cross-flow type.

The cross-flow low-pressure turbine 5 is also provided with multiple turbine stages each composed of nozzle vanes 11 (stationary blades) engaged with an inner casing 9 and buckets 12 implanted in the low-pressure turbine rotor 7, as in the high-intermediate-pressure turbine 4. These turbine stages are arranged along the axial direction of the low-pressure turbine rotor 7 toward both sides of the inner casing 9 so as to have the crossover tube 8 at the center.

Further, the low-pressure turbine 5 is provided with a steam condenser 10 for condensing the spent steam.

As shown in FIG. 5, the nozzle vanes 11 of each of the turbine stages are supported by a diaphragm outer ring 14 at tip end of the vanes 11 and a diaphragm inner ring 15 at the bottom end of the nozzle vanes 11.

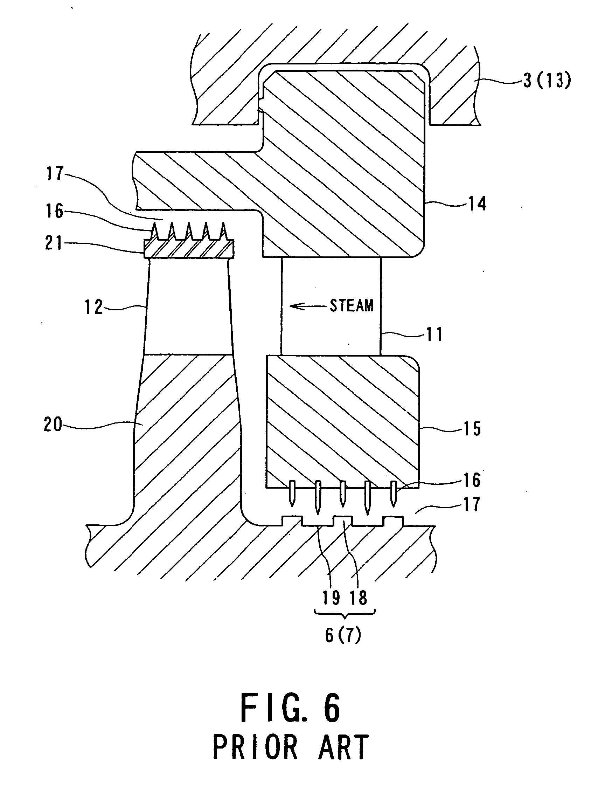

As shown in FIG. 6, the diaphragm inner ring 15 is provided with seal strips 16 facing an outer surface of the turbine rotor 6 (low-pressure turbine rotor 7) having protrusions 18 and recesses 19 (so-called a labyrinth seal). Thus, the leakage of steam through gaps 17 is reduced.

The diaphragm outer ring 14 is engaged with the turbine casing 3 (low-pressure turbine casing 13) and extends toward the buckets 12.

The bottom portions of the buckets 12 are implanted in a turbine disk 20 protruding from the turbine rotor 6 (low-pressure turbine rotor 7). The buckets 12 are provided with shrouds 21 on the tip portions thereof. The shrouds 21 are provided with seal strips 16 facing an inner surface of the diaphragm outer ring 14. Thus, the leakage of steam through gaps 17 is reduced.

As described above, the conventional steam turbine is provided with the seal strips 16 in such a manner that the seal strips 16 are positioned at each gap 17 between the stationary component and the rotating component, i.e., between the diaphragm inner ring 15 and an outer surface of the turbine rotor 6 (low-pressure turbine rotor 7) and between the diaphragm outer ring 14 and the shrouds 21 of the buckets 12. Thus, the seal strips 16 prevent the steam from leaking and contribute to generate the power.

Further, there have been provided many inventions relating to technologies providing a sealing device at a gap between a stationary component and a rotating component such as disclosed, for example, in Japanese Unexamined Patent Application Publication Nos. 2001-123803 and 2005-220879.

The sealing device shown in FIGs. 5 and 6 has been widely used in fluid machinery such as a steam turbine and a gas turbine. In such fluid machinery, the stationary component and the rotating component contact to each other due to vibration in the operation thereof. That is, the diaphragm inner and outer rings 15 and 14 supporting nozzle vanes 11 as the stationary components and the turbine rotor 6 (low-pressure turbine rotor 7) and the shrouds 21 of the buckets 12 as the rotating components, are brought into contact to each other. Consequently, some of the strips 16 are broken, and thus, there has a limitation to surely prevent the steam from leakage.

Under such circumstances, recently, there is provided a sealing device employing a technology in which a base material for either one of the rotating component or the stationary component is covered with an abradable layer with excellent machinability.

This abradable layer is as if a sponge-like layer containing a strengthening material such as plastic or graphite dispersed in a coating material.

Therefore, with the abradable layer, the seal strips 16 have not been broken even if the stationary component and the rotating component are brought into contact with each other due to the vibration in the operation. However, such an abradable layer causes a problem in that an adhesive strength to the base material is significantly decreased.

In addition, since the sealing device handles fluid having a temperature about 300°C or more, it is required to dispose a bond coat layer having excellent adhesion property between the base material and the abradable layer. This bond coat layer is, however, required to have properties such as corrosion resistance to corrosive materials, oxidation resistance at high temperature ambient, and steam oxidation resistance.

US 4,566,700 discloses an abradable/abrasive seal system having particular utility in gas turbine engines, wherein the seal system includes an abrasive layer, which prevents a direct interaction between components having relative motion, and an abradable layer which provides an effective degree of fluid sealing between the components.

US 2004/0126225 A1 relates to a sealing assembly for disposition in a rotary machine, which is disposed between a rotary component and a stationary component of the rotary machine, wherein the sealing assembly includes at least one sealing strip affixed to one of the rotary and stationary components, and wherein an abradable portion is disposed on another of the rotary and stationary components and is positioned radially opposite to the at least one sealing strip.

US 6,203,021 B1 relates to an abradable seal for a component, comprising a pattern cut into a surface of an abradable seal material with a laser, which is effective to provide an improved abradability in the area of the pattern, wherein said abradable seal material seals the space between the component and an adjacent surface movable relative thereto by being abraded by a relative movement between the component and the adjacent surface and wherein the pattern is cut in an area and to a depth which the adjacent surface will abrade in creating a seal.

GB 2,399,777 A discloses an abradable seal for gas turbine engines, wherein an abradable coating on for example a casing of a gas turbine engine comprises a first region containing abrasive material and a second region without the abrasive material.

Therefore, provision of an improved and novel sealing device that can maintain a steam-leakage-preventing property for a long time has been desired, even if the stationary component and the rotating component are brought into contact with each other.

### SUMMARY OF THE INVENTION

The present invention was conceived in consideration of the above circumstances, and an object of the present invention is to provide a sealing device capable of significantly reducing leakage of fluid by surely maintaining the adhesion property between a base material and an abradable layer and further maintaining the sealing of the fluid leakage.

The above and other objects can be achieved according to the present invention by the sealing device according to claim 1, the fluid machinery according to claim 4 and the steam turbine according to claim 5. Further developments of the present invention are set out in the dependent claims.

The sealing device may preferably be applied to a fluid machinery, such as a steam turbine provided with a turbine rotor to which buckets are implanted and nozzle vanes, in which the rotating component is composed of the turbine rotor and the buckets and the stationary component is a diaphragm inner ring and a diaphragm outer ring supporting the nozzle vanes.

In the sealing device according to the present invention, the seal strips provided to either one of the rotating component or the stationary component. The coating layer composed of an abradable layer and a bond coat layer is disposed on a base material of the rotating component or the stationary component so that the coating layer faces the seal strips. Therefore, the seal strips are not broken even if the rotating component and the stationary component are brought into contact with each other due to vibration in the operation. Consequently, the leakage of fluid can be surely prevented.

The nature and further characteristic features of the present invention will be made clearer from the following descriptions made with reference to the accompanying drawings.

### BRIEF DESCRIPTION OF THE DRAWINGS

In the accompanying drawings:
FIG. 1 is a schematic diagram of a coating layer adhered to a base material applied to a sealing device according to an embodiment of the present invention;
FIG. 2 is a schematic diagram of an example of a sealing device according to an embodiment of the present invention in which seal strips are provided to a stationary (or fixed) component and a coating layer is adhered to the base material of a rotating component facing the seal strips;
FIG. 3 is a schematic diagram of an example of a sealing device according to another embodiment of the present invention in which seal strips are provided to a rotating component and a coating layer is adhered to the base material of a stationary component facing the seal strips;
FIG. 4 is a schematic diagram showing a general structure of a known steam turbine;
FIG. 5 is a perspective view of one half of a nozzle diaphragm constituting a stationary component applied to the known steam turbine; and
FIG. 6 is a partial cross-sectional view of the known steam turbine in which the stationary component and the rotating component are provided with a sealing device.

### DESCRIPTION OF THE PREFERRED EMBODIMENTS

Embodiments of sealing devices according to the present invention will be described hereunder with reference to the accompanying drawings.

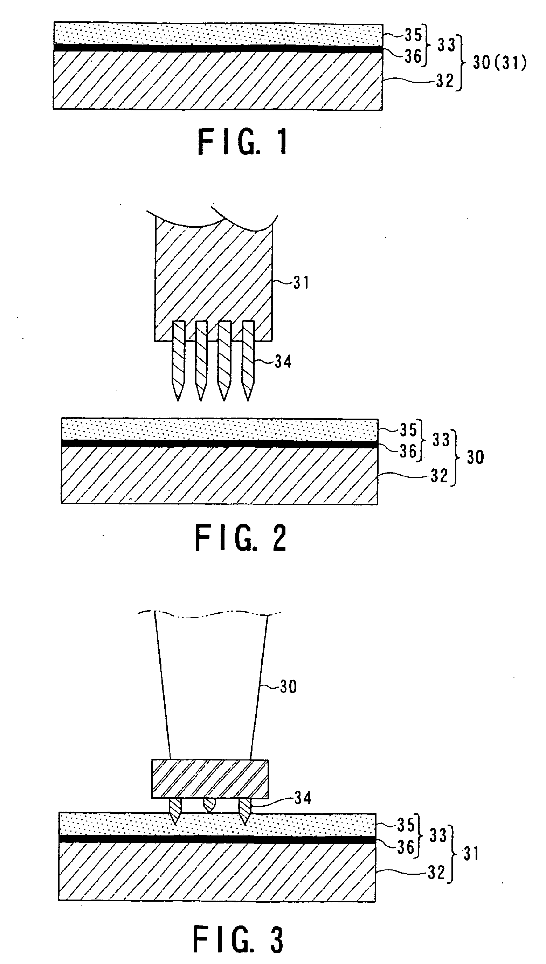

First, with reference to FIG. 1 representing a sealing device according to an embodiment of the present invention, the sealing device is applied to a fluid machinery having a rotating component 31 such as a turbine rotor and buckets and a stationary (or fixed) component 30 such as a diaphragm inner ring and a diaphragm outer ring supporting nozzle vanes. A coating layer 33 is formed on a base material 32 of either one of the rotating component 31 or the stationary component 30. The coating layer 33 is composed of an abradable layer (upper layer) 35 and a bond coat layer (lower layer) 36 serving as an adhesive (bonding agent).

Specifically, as shown in FIG. 2, a shroud of a bucket is an example of the rotating component 31 and is provided with seal strips 34. A diaphragm outer ring facing the seal strips 34 is an example of the stationary component 30. A coating layer 33 is disposed on the base material 32 of the diaphragm outer ring as the stationary component 30.

In another embodiment, as shown in FIG. 3, a diaphragm inner ring supporting nozzle vanes is an example of the stationary component 30 and is provided with seal strips 34. A turbine rotor (low-pressure turbine rotor) facing the seal strips 34 is an example of the rotating component 31. A coating layer 33 is disposed on the base material 32 of the turbine rotor (low-pressure turbine rotor).

The base material 32 of the rotating component 31 or the stationary component 30 is an iron-based alloy with a martensite or bainite microstructure.

The abradable layer 35 serving as the upper layer of the coating layer 33 is made of a composition with excellent machinability. An example of such composition includes a composition containing a NiCrA1 alloy and bentonite, a composition containing a NiCrFeAl alloy and bentonite, and a composition containing a MCrAlY alloy and bentonite, or like.

The bond coat layer 36 serving as the lower layer of the coating layer 33 is made of Ni-based alloy steel or pure nickel. An example of the Ni-based alloy steel includes a NiCr alloy such as Inconel 625, a NiAl alloy containing 5 wt% of Al in Ni, a Co-based alloy such as CoNiCrAlY, NiMo alloy steel, and Hastelloy C.

The bond coat layer 36 is formed by high-velocity oxygen-fuel (HVOF) or high power plasma spraying so as to have a porosity of 2.0% or less in order to further enhance the corrosion resistance, oxidation resistance, and steam oxidation resistance.

A bond coat layer 36 formed by high-velocity oxygen-fuel (HVOF) or high power plasma spray in order to enhance the resistance such as corrosion resistance is controlled so as to have a linear expansion coefficient of an intermediate value between that of the base material 32 and that of the abradable layer 35. Thus, the resistance to heat stress caused by the operation can be improved.

For example, in a known steam turbine in which the seal strips 34 are disposed between the rotating component 31 and the stationary component 30, the distance (clearance) therebetween is 0.5 to 0.7 mm, and if the rotating component 31 and the stationary component 30 are brought into contact with each other, the seal strips 34 are liable to be broken. Therefore, the fluid leakage cannot be sufficiently prevented.

In addition, in the known steam turbine, an iron-based alloy with a martensite or bainite microstructure was used as the base material of the rotating component 31 and the stationary component 30. Therefore, the base material could not often maintain the corrosion resistance, oxidation resistance, and steam oxidation resistance over a long term operation, thus having been disadvantageous.

However, in the sealing device according to the present invention, the coating layer 33 composed of the abradable layer 35 and the bond coat layer 36 is adhered to a base material 32. The abradable layer 35 is made of a material with excellent machinability, such as a NiCrAl alloy. The bond coat layer 36 is made of a material with excellent corrosion resistance, oxidation resistance, and steam oxidation resistance, such as a NiAl alloy. The bond coat layer 36 is formed by high-velocity oxygen-fuel (HVOF) or high power plasma spraying so as to have a porosity of 2.0% or less. As a result, the distance between the adjacent seal strips 34 can be decreased to 0.2 mm.

It was confirmed through experiment that when the distance was 0.2 mm, the seal strips 34 were not broken even if the rotating component 31 and the stationary component 30 were brought into contact with each other. Thus, a sealing device excellent in performance can be realized.

## Claims

1. A sealing device for preventing fluid from leaking comprising:
a rotating component (31) and a stationary component (30),
seal strips (3-4) provided to either one of the rotating component (31) or the stationary component (30) with a gap formed therebetween; and
a coating layer (33) provided to a base material (32) of the rotating component (31) or the stationary component (30) so that the coating layer (33) faces the seal strips (34),
wherein the coating layer (33) is composed of an abradable layer (35) and a bond coat layer (36), **characterized in that** the abradable layer (35) is directly disposed on the bond coat layer (36), which has been formed by high-velocity oxygen-fuel or plasma spray so as to have a porosity of 2.0% or less, and which has a linear expansion coefficient which is controlled to an intermediate value between that of a base material (32) of the stationary component (30) or the rotating component (31) and that of the abradable layer (35).

2. The sealing device according to claim 1, wherein the bond coat layer (36) is formed of one of Ni-based alloy steel, Co-based alloy steel and a MCrAlY alloy.

3. The sealing device according to claim 1 or 2, wherein the abradable layer (35) is made of a composition containing any one of a NiCrAl alloy and bentonite, a composition containing a NiCrFeAl alloy and bentonite, a composition containing a MCrAlY alloy and bentonite.

4. A fluid machinery comprising a sealing device according to any one of claims 1 to 3.

5. A steam turbine provided with a turbine rotor (7), to which buckets (12) are implanted, and nozzle vanes (11), in which the rotating component (31) is composed of the turbine rotor (7) and the buckets (12) and the stationary component (30) is a diaphragm inner ring (15) and a diaphragm outer ring (14) supporting the nozzle vanes (11), the steam turbine comprising a sealing device according to any one of claims 1 to 3.

## Patentansprüche

1. Abdichtungsvorrichtung zum Verhindern einer Fluidleckage, umfassend:
eine rotierende Komponente (31) und eine stationäre Komponente (30),
Dichtungsstreifen (34), die entweder an der rotierenden Komponente (31) oder der stationären Komponente (30) mit einem dazwischen ausgebildeten Spalt bereitgestellt sind, und
eine Beschichtungsschicht (33), die derart an einem Basismaterial (32) der rotierenden Komponente (31) oder der stationären Komponente (30) bereitgestellt ist, dass die Beschichtungsschicht (33) auf die Dichtungsstreifen (34) gerichtet ist,
wobei die Beschichtungsschicht (33) aus einer zerreibbaren Schicht (35) und einer Haftbeschichtung (36) zusammengesetzt ist, **dadurch gekennzeichnet, dass** die zerreibbare Schicht (35) direkt auf der Haftbeschichtung (36) angeordnet ist, die derart durch ein Hochgeschwindigkeitsflammspritzen oder Plasmaspritzen ausgebildet worden ist, dass sie eine Porosität von 2,0 % oder weniger aufweist, und die einen linearen Ausdehnungskoeffizienten aufweist, der auf einen Zwischenwert zwischen demjenigen des Basismaterials (32) der stationären Komponente (30) oder der rotierenden Komponente (31) und demjenigen der zerreibbaren Schicht (35) eingestellt ist.

2. Abdichtungsvorrichtung nach Anspruch 1, bei der die Haftbeschichtung (36) aus einem/einer von einem Legierungsstahl auf Ni-Basis, einem Legierungsstahl auf Co-Basis und einer MCrAlY-Legierung ausgebildet ist.

3. Abdichtungsvorrichtung nach Anspruch 1 oder 2, bei der die zerreibbare Schicht (35) aus einer Zusammensetzung, die jedwedes von einer NiCrAl-Legierung und Bentonit enthält, einer Zusammensetzung, die eine NiCrFeAl-Legierung und Bentonit enthält, einer Zusammensetzung, die eine MCrAlY-Legierung und Bentonit enthält, hergestellt ist.

4. Fluidmaschine, die eine Abdichtungsvorrichtung nach einem der Ansprüche 1 bis 3 enthält.

5. Dampfturbine, die mit einem Turbinenrotor (7), in den Schaufeln (12) eingesetzt sind, und Leitschaufeln (11) ausgestattet ist, wobei die rotierende Komponente (31) aus dem Turbinenrotor (7) und den Schaufeln (12) zusammengesetzt ist und die stationäre Komponente (30) ein Zwischenboden-Innenring (15) und ein Zwischenboden-Außenring (14) ist, welche die Leitschaufeln (11) halten, wobei die Dampfturbine eine Abdichtungsvorrichtung nach einem der Ansprüche 1 bis 3 umfasst.

## Revendications

1. Dispositif d'étanchéité pour empêcher un fluide de fuir, comprenant :
un composant rotatif (31) et un composant stationnaire (30),
des bandes d'étanchéité (34) appliquées à l'un ou l'autre du composant rotatif (31) et du composant stationnaire (30) avec un intervalle formé entre eux ; et
une couche de revêtement (33) appliquée à un matériau de base (32) du composant rotatif (31) ou du composant stationnaire (30) de sorte que la couche de revêtement (33) soit en regard des bandes d'étanchéité (34),
dans lequel la couche de revêtement (33) est composée d'une couche abradable (35) et d'une couche de revêtement de liaison (36), **caractérisé en ce que** la couche abradable (35) est directement disposée sur la couche de revêtement de liaison (36), qui a été formée par pulvérisation à grande vitesse d'oxygène-carburant ou de plasma de manière à avoir une porosité de 2,0 % ou moins, et qui a un coefficient de dilatation linéaire qui est réglé à une valeur intermédiaire entre celle d'un matériau de base (32) du composant stationnaire (30) ou du composant rotatif (31) et celle de la couche abradable (35).

2. Dispositif d'étanchéité selon la revendication 1, dans lequel la couche de revêtement de liaison (36) est formée de l'un des composants suivants : acier allié à base de Ni, acier allié à base de Co et alliage de MCrAlY.

3. Dispositif d'étanchéité selon la revendication 1 ou 2, dans lequel la couche abradable (35) est formée d'une composition contenant l'une quelconque des composions suivantes : composition d'alliage de NiCrAl et de bentonite, composition d'alliage de NiCrFeAl et de bentonite, composition d'alliage de MCrAlY et de bentonite.

4. Machine à fluide comprenant un dispositif d'étanchéité selon l'une quelconque des revendications 1 à 3.

5. Turbine à vapeur d'eau munie d'un rotor de turbine (7), sur lequel sont implantés des augets (12), et des aubes directrices (11), dans laquelle le composant rotatif (31) est composé du rotor de turbine (7) et des augets (12) et le composant stationnaire (30) est un anneau interne de diaphragme (15) et un anneau externe de diaphragme (14) supportant les aubes directrices (11), la turbine à vapeur d'eau comprenant un dispositif d'étanchéité selon l'une quelconque des revendications 1 à 3.
